# EUROPEAN PATENT APPLICATION

(11) **EP 4 125 269 A1**
(43) Date of publication of application: **01.02.2023**
(21) Application number: 21188583.5
(22) Date of filing: 29.07.2021
(51) Int. Cl.: H04N 5/376, H01L 31/107, H04N 5/369

(54) **DETECTOR ARRAY, IMAGING SYSTEM AND METHOD TO IMAGE A SAMPLE**

(71) Applicant: Leica Microsystems CMS GmbH, 35578 Wetzlar (DE)
(72) Inventor: Birk, Holger, 74909 Meckesheim (DE); Widzgowski, Bernd, 69221 Dossenheim (DE)
(74) Representative: DehnsGermany Partnerschaft von Patentanwälten

(57) **Abstract**

The present invention relates to a detector array (100) comprising multiple detector elements (102) and multiple signal lines (110, 120), wherein each of the multiple detector elements (102) is connected to at least two of the multiple signal lines (110, 120), wherein each of the multiple signal lines (110, 120) is connected to at least two of the multiple detector elements (102), and wherein each of the multiple detector elements (102) is configured to create a signal (S) simultaneously in each of the connected signal lines (110, 120). The invention also relates to an imaging system and a method to image a sample.

## Description

### Technical Field

The present invention essentially relates to a detector array comprising multiple detector elements, to an imaging system comprising such detector array, and to a method to image a sample by means of such imaging system.

### Background

Detector arrays comprising multiple detector elements, typically arranged in a two-dimensional shape with lines and columns, can be used for signal or image acquisition in different applications like microscopy. Such detector arrays can, on the one hand, provide high spatial resolution by using a high number of (individual) detector elements; this, however results in low temporal resolution due to the high number of readout and processing steps. On the other hand, such detector arrays can provide high temporal resolution; this, however, typically requires reducing the number of (individual) detector elements and, thus, results in low spatial resolution.

### Summary

In view of the situation described above, there is a need for an improved signal or image acquisition. According to embodiments of the invention, a detector array, an imaging system and a method to image a sample with the features of the independent claims are proposed. Advantageous further developments form the subject matter of the dependent claims and of the subsequent description.

An embodiment of the invention relates to a detector array that comprises multiple detector elements (individual detector elements, e.g., each detector element can correspond to a pixel in an acquired image, wherein a pixel (or image point) is, e.g., an intensity value at a specific x y or other coordinate in the image) and multiple signal lines (i.e., electrical lines that allow transmission of (electrical) signals). Each of the multiple detector elements is connected to at least two of the multiple signal lines, and each of the multiple signal lines is connected to at least two of the multiple detector elements. Further, each of the multiple detector elements is configured to create a signal (in particular, in reaction of a photon arriving at the respective detector element) simultaneously in each of the connected signal lines. This means that in each of the signal lines connected to the respective detector elements, an electrical signal is created at the beginning of each of the respective signal lines at the same time.

For example, each of the multiple detector elements can comprise a photo diode, preferably a single photon avalanche diode. In addition, creating the signal (in reaction of a photon arriving at the detector element) comprises changing, e.g., raising or lowering, a voltage level applied to the respective signal line. Note that, due to finite and potentially different lengths of said signal lines, the signal does not necessarily have to be synchronous at the ends of the respective signal lines. This can be considered in different ways as will be explained later.

Advantageously, said detector array further comprises a circuit connected, directly or indirectly, to each one of the multiple signal lines. Said circuit is configured to determine, upon receiving at least one signal from each of at least two of the multiple signal lines, one or more out of the multiple detector elements corresponding to the signals. Said circuit can comprise, for example, a processor and/or an FPGA (Field Programmable Gate Array).

Such wiring of the individual detector elements allows a high number of detector elements with only few (or at least less than the number of detector elements) signal lines to be read out. In particular, a number of the multiple detector elements is greater than a number of the multiple signal lines. Preferably, all detector elements connected to the same signal line are connected in an OR-wiring. In particular in high speed applications like scanning microscopy, a low number of photons arrives at the entire detector array per time unit; thus, the particular individual detector element at which a photon was received can be re-constructed based on only few signal lines.

According to a simple example, said detector array has a matrix form with rows and columns, wherein all detector elements of a row are connected to the same signal line and wherein all detector elements of a column are connected to the same signal line, the lines being different for rows and columns. This results, for example, in a detector array with eight rows (and eight signal lines for the rows, one signal line for each row; all detector elements of the same row connected to the signal line in an OR-wiring) and eight columns (with eight signal lines for the columns, one signal line for each column; all detector elements of the same column connected to the signal line in an OR-wiring). Note that the number eight is only chosen as an example. If at such a detector array, a single photon arrives at one of the individual detector elements within a specific period, this photon creates a signal in one signal line of a row and in one signal line of a column. While from one of these two signals only a row or column can be identified, the combination of both signals allows a logical reconstruction of the specific individual detector element the photon arrived at. In this way, a low number of signal lines (16 in this example) allows a high spatial resolution (64 detector elements or pixels in this example) and a high temporal resolution due to only few signal lines to be read out It is noted that in case of two or more photons arriving at different detector elements within such period (for reading out the signal lines) an exact re-construction of these detector elements might not be possible. This, however, can be neglected in particular in applications with only few photons per time unit. In addition, there can still be obtained information from such a situation as will be explained later.

While the invention will further be explained, in particular, with respect to that simple example of a matrix (e.g., 8x8) detector array, the idea is, in general, applicable to different numbers of detector elements and, in particular, different forms and ways of combining the individual detector elements via signal lines.

Preferably, the detector array comprises multiple signal line groups of signal lines, wherein each of the multiple signal lines is assigned to a single one of the multiple signal line groups, and wherein each of the multiple detector elements is connected to one signal line of each of at least two of the multiple signal line groups. Such signal line groups can correspond to, for example, rows and columns (this would be two such signal line groups) of the example above.

Further, the signal lines of each of the multiple signal line groups can be connected to a readout tap, for example, which kind of combines the signal lines of a signal line group and provides information about all signals present at the connected signal lines; in this way, information about at which one(s) of all these signal lines a signal is present, is provided. Such readout tap can comprise, for example, an output amplifier and an analogue-to-digital converter or comparator with appropriate threshold for each signal line connected to it; this results in a high or low signal level for each signal line present at the read out tap. Further, such readout tap can be used for connecting to a circuit with a processor or the like. This allows easy connecting and efficient readout of the detector array. For example, one readout tap for all row signal lines and one readout tap for all column signal lines can be provided. In general, however, all signal lines can also be directly connected to the circuit without such readout tap.

Further, the signals of a signal line group can, preferably, be (virtually or digitally) connected in an OR-wiring. This allows providing information about the presence of a photon (somewhere) at the detector array if an application for which the detector array is used does not require a spatial resolution. Such virtual or digital OR-wiring can, for example, be realized in the circuit (or also in the readout taps). Preferably, the circuit (or readout tap) is configured to switch such virtual or digital OR-wiring on and/or off, depending on the current needs.

Besides the simple matrix structure with rows and columns, the idea presented herein can, preferably, be used for different kinds of groups of detector elements. Thus, in a preferred embodiment, said detector array comprises multiple different kinds of detector element groups with at least two detector elements per kind. Such kinds of detector elements groups can be, for example, the (full) rows and (full) columns. However, also parts of rows and/or columns can form such a kind of group. Also, different diagonal rows and/or columns are possible. In such an embodiment, each of the multiple detector elements is assigned to at least two of the multiple kinds of detector element groups, and at least two of the multiple detector elements are assigned to each detector element group. In addition, for each detector element group, all detector elements assigned to the same detector element group are connected to the same signal line from one of the multiple signal line groups, and each kind of detector element groups is assigned to a different one of the multiple signal line groups. This allows building different arrangements or forms of detector arrays with few signal lines. For further explanation, refer to the Figs. and the corresponding description.

As mentioned above, the multiple detector elements can be arranged in rows and columns, preferably according to a matrix, wherein rows and columns correspond to different kinds of detector element groups. In another preferred embodiment, however, the multiple detector elements are arranged in a single row, wherein the row comprises at least two parts, wherein such part of a row corresponds to a kind of detector element groups, and wherein a positional number of a detector element within each part corresponds to another kind of detector element groups. In this way, the wiring structure explained above for the detector array in matrix form is used for a row detector array by using the individual row wirings from the matrix for parts of the single row. In other words, the individual rows of the matrix can be separated and arranged next to each other to form a single long row; the wiring, however, is not changed. For further explanation, refer to the Figs. and the corresponding description.

While up to now, only examples with two signal line groups like rows and columns were mentioned, also three or more signal line groups can be used. For example, the multiple detector elements can be arranged in rows and diagonal columns, wherein rows and two different diagonal directions of columns correspond to different kinds of detector element groups. For example, the two different diagonal directions can have an angle of 60° with respect to each other; in addition, each of these two different diagonal directions can have an angle of 60° with respect to the row. This results in a hexagonal structure of detector elements. For further explanation, refer to the Figs. and the corresponding description.

As mentioned above, a circuit can be provided that is is configured to determine, upon receiving at least one signal from each of at least two of the multiple signal lines, one or more out of the multiple detector elements corresponding to the signals. Said circuit is, preferably, further configured to determine whether the received signals are unambiguously assignable to one or more out of the multiple detector elements, and, if so, to determine the one or more out of the multiple detector elements. This is the case, for example, if there is one signal for one row and one signal for one column. Further, the positions of the one or more out of the multiple detector elements within the detector array can be determined as points of incidence of photons. In the example mentioned, this position is the detector element assigned to the row and to the column (where the row and the column cross each other). This allows the high spatial resolution of the detector array mentioned above.

If the received signals are not unambiguously assignable to one or more out of the multiple detector elements, said circuit might not determine any detector element However, in such case these signals still provide information that can be used. For example, said circuit can be configured to determine a minimal number of detector elements, which potentially could have created the signals. For example, there can be two signals for two rows and two signals for two columns. In this case, there need to be at least two photons, which arrived at different detector elements, i.e., the minimal number is two. Further, in such case there can be different configurations that result in the four signals (two for rows, two for columns). Thus, said circuit can also be configured to determine all detector elements, which potentially could have created the signals. In the example mentioned, each detector element at which one of the two rows crosses one of the two columns potentially could have created one of the signals.

As mentioned earlier, in each of the signal lines connected to the respective detector elements, an electrical signal is created at the beginning of each of the respective signal lines at the same time; this results from a photon arriving at the respective detector element. Such arrival times of photons can the determined by means of said circuit. In particular, such arrival times are determined for one or more out of the multiple detector elements, to which the signals are assigned. Preferably, said circuit is configured to consider signal transit times of the received signals when determining said arrival times. Such signal transit times can be different for different signal lines due to different lengths of such signal lines, as also mentioned earlier.

As mentioned, due to finite and potentially different lengths of said signal lines, the signal does not necessarily have to be synchronous at the ends of the respective signal lines. In that such lengths of signal lines are determined or otherwise known, the respective signal transit times can be determined and be considered in determining arrival times of photons. Note that, in general, the signal lines might also be configured such that the lengths of all signal lines are identical, including the connections to and between the individual detector elements.

Further, it is noted that the different signal lines can but need not necessarily be read out at the same time. For example, only the signals lines of the same signal line group like all rows or all columns (e.g., via a respective readout tap) are readout at the same time. Different signal line groups, however, might be read out at different times, for example, by means of a clocked readout This might result in reading out a signal at a signal line of a row at a first time and a signal at a signal line of a column at a second, later time, while both signals were initially created simultaneously. This allows different options for analysing the signals. For example, the signals from the first time can be recorded and matched with the signals from the second time. Also, signals from the first time can be disregarded if there is no matching between different signal line groups. Typically, the signal line groups are read out faster (e.g. at 10 GHz) than what corresponds to the pulse duration generated by a photon (e.g. 1 ns, what corresponds to 1 GHz). Thus, in the case of clocked readout, the signal of a photon is usually in the "high" state (high level of the signal) for several clocks. In this way, the signals on the various signal line groups overlap if there are small differences in transit time. If it is necessary to delay the signals against each other longer, "FIFOs" (where FIFO corresponds to "First In First Out") with different taps can be used, for example.

In another preferred embodiment, the invention relates to an imaging system, e.g., a microscope, configured to image a sample and which comprises said detector array. A particularly preferred application is fluorescence-lifetime imaging microscopy (FLIM). In a further preferred embodiment, the invention relates to a method to image a sample by means of said imaging system.

Preferably, said imaging system is configured to image said sample in at least one of: a scanning manner, by simultaneously illuminating several foci, a spectrally resolved manner, and a time resolved manner. In case of the spectrally resolved manner, the imaging system is further configured to direct light from the sample to the detector array such that light of different wavelengths is directed to different detector elements. This can be achieved, for example, by means of a diffraction grating or prism.

In imaging a sample in scanning manner, e.g., in scanning microscopy, the task of the detector array typically is to provide a signal proportional to the number of incident photons for each image point (pixel or voxel). When a sample is imaged by scanning a light beam over the sample, only individual parts of the sample are illuminated at a time, resulting in only low light intensity in the image beam (low photon rate). A dwell time per pixel is in the range of 10 ns to 100 µs. The amount of light to be detected is a maximum of approx. 1x10⁹ to 5x10⁹ Photons per second. The limiting factor in such applications is, essentially, the number of dye molecules within the volume in focus. In addition to the amount of light, information about the exact point in time at which the photon arrived (i.e., the arrival time as mentioned before) is desirable. The lifetime of the respective fluorescent dye can be inferred from the time difference between an excitation pulse and the detection. Here, an accuracy of the time measurement of typically less than 100 ps is required, and the readout should take place at least once per laser pulse. Typical pulse frequencies are in the range from 1 to 100 MHz.

In addition, more information about the sample is obtained if not just individual detector elements but an entire array of detectors is available. In the case of one-dimensional (1-D) detector arrays (a detector array with a single row as mentioned above), this can be, for example, a spectrometer arrangement (imaging a sample in spectrally resolved manner) such that the colour of the detected photon can also be determined. With simultaneous illumination of several foci, the signals for several pixels (detector elements) can also be determined at the same time. Further, by projecting the light from the focus volume onto a two-dimensional (2-D) detector array (e.g., the matrix form mentioned above), the position can also be determined more precisely (this is a so-called Airyscan). In these applications, the detector array proposed herein allows sufficient spatial resolution and, at the same time (what is of particular importance), high temporal resolution. Due to the high readout speed of the proposed detector array, photons can be resolved very good in time.

In contrast to the requirements for a typical camera, in which exposure is carried out over a longer period, so that each detector element usually acquires the information from several photons, the requirements in scanning microscopy with regard to the number of detector elements to be read out simultaneously are reduced. Since the readout is performed very quickly and the photon rate is limited at the same time, only very few photons hit the entire detector array per readout process. This aspect is used within the present invention, as mentioned before. If a photon hits a detector element, the output signals (voltage) of the detector elements changes for a short time. For example, if the detector element is a SPAD (single photon avalanche diode), the analogue output signal can be processed and compared with a threshold value so that a logic signal with a duration of less than 1 ns is created.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

### Short description of the Figures

- Fig. 1: schematically shows a detector array according to a preferred embodiment of the invention;
- Fig. 2: schematically shows a detector array according to a further preferred embodiment of the invention;
- Fig. 3: schematically shows a detector array according to a further preferred embodiment of the invention;
- Fig. 4: schematically shows the detector array of Fig. 1 with other details; and
- Fig. 5: schematically shows an imaging system according to a further preferred embodiment of the invention.

### Detailed Description

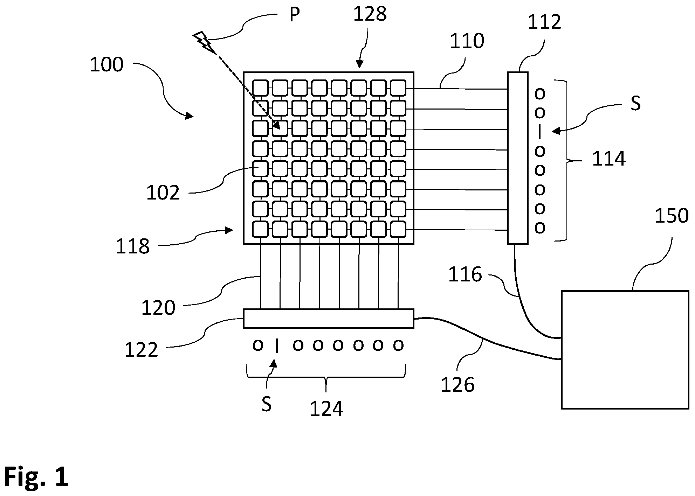

Fig. 1 schematically illustrates a detector array 100 according to a preferred embodiment of the invention. Detector array 100 comprises, by means of example, 64 detector elements 102, arranged in a matrix form with eight rows 118 and eight columns 128. Each individual detector can comprise a single photon avalanche diode. Rows and columns as such are different kinds of detector elements groups, i.e., there are two different kinds in this example. In total, there are 16 detector element groups, said eight rows (one kind of detector element groups) and said eight columns (another kind of detector element groups). Each individual detector element is assigned to each of these two kinds of groups, i.e., each detector element is assigned to one row and to one column. For example, the detector element at the top left is assigned to the topmost row and to the leftmost column.

Further, the detector array 100 comprises 16 signal lines, in particular, eight signal lines 110 for the rows 118, and eight signal lines 120 for the columns 128. Said eight signal lines 110 form a signal line group 114 corresponding to the rows, and said eight signal lines 120 form a signal line group 124 corresponding to the columns. Each detector element 102 is assigned to and connected to two signal lines such that it is connected to one signal line 110 of the rows and to one signal line 120 of the columns 128.

Further, the detector array 100 comprises two readout taps, one readout tap 112 for the signal lines 110 for the rows, and one readout tap 122 for the signal lines 120 for the columns. All detector elements of a single row are connected in an OR-wiring, and all signal lines 110 of rows are also connected to the readout tap 112. Correspondingly, all detector elements of a single column are connected in an OR-wiring, and all signal lines 120 of columns are also connected to the readout tap 122. The readout taps 112, 122 are connected, via further connection lines 116, 126 (each of the connection lines 116, 126 can represent eight individual lines, the signal lines 110 and 120 respectively), to a circuit 150 that is configured to analyse and/or process signals present the signal lines. Circuit 150 can comprise, for example, a processor and/or an FPGA. In this example, the readout taps 112, 122 do not have any specific function besides, for example, providing connectors for the signal lines 116, 126 to connect to the detector array.

In the following, the working principle of detector 100 will be described. When using the detector array 100 for imaging, photons will arrive at it; in typical applications, only one photon or few photons at a time will arrive. By means of example, a single photon P is indicated, arriving at the detector element defined by the third row from the top and the second column from the left This photon P creates a signal S simultaneously in both signal lines connected to this specific detector element In this example, these are the third signal line 110 from the top and the second signal line 120 from the left. The signals are indicated by a number "1" next to the readout taps 112, 122 of the mentioned signal lines. For the other signal lines without any signal created therein, a number "0" is indicated.

These two signals S created by the photon P can now be read out by means of the circuit 150, e.g., via readout taps 112, 122. Depending on the lengths of the signal lines from the detector element, at which the photon arrived, to the readout taps or the circuit 150, these two signals can arrive at the same time or at different times at the respective readout tap 112, 122 or at the circuit 150. In addition, depending on a readout mode, both readout taps 112, 122 or the respective signal lines can be read out simultaneously and one after the other.

Irrespective of the specific readout, the information carried by these two signals S allows determining the specific detector element at which the photon arrived and at which the signals were created. In this example, the detector element is the one at which the third row from the top crosses the second column from the left Such determining or assigning can be performed by means of a look-up table or the like.

For example, these two signals S can be interpreted as a tuple (i,j) with i=3 and j=2, i.e., (3,2), where 1≤i,j≤8 and where i corresponds to the rows and j corresponds to the columns. Such tuple (i,j) can be linked or assigned to corresponding positions of the detector elements within the entire detector array 100.

Such unambiguous determination of the individual detector element, at which the photon arrived, is possible with only two signals; this can (but does not need to) differ with more signals. Three signals (two for rows and one for a column, or vice versa) typically result from two detector elements (where the rows/columns cross). If, for example, four signals are received, two for rows i=2, i=3 and two for columns, j=2, j=3, such unambiguous determination is not possible. These four signals might be received, for example, from two photons at detector element positions (2,2) and (3,3) or from detector element positions (2,3) and (3,2), with rows and columns counted from the top and from the left, respectively. Also, three or four photons might have been received in this case. Although these four signals do not allow unambiguous determination of the individual detector elements, which potentially could have created the signals, they allow determining a minimum number of detector elements, which potentially could have created the signals. This minimum number is two. Also, these signals allow determining all detector elements, which potentially could have created the signals. These are the four detector elements at positions (2,2), (2,3), (3,2) and (3,3).

In particular in (imaging) applications with low photon rates (low numbers of photons arriving at the detector array per time unit, e.g., up to 100 million counts per second with a pulse duration per photon of less than 1 ns), such detector array and the described analysing logic (integrated in said circuit 150, for example) allows high spatial resolution (high number of detector elements) and high temporal resolution or high readout speed due to a low number of signal lines to be read out. For randomly appearing photons, for more than 90% of the time there is no pulse at all. Only a small percentage of photon pulses will overlap. Photon rates for fluorescent microscopy are typically less than 100 million counts per second. In general, having large FPGAs with high numbers of inputs would allow reading out a high number of detector elements (one element per input) simultaneously. However, this would require such large FPGA and a corresponding high number of signal and connection lines. With the proposed idea, however, smaller FPGAs and fewer lines can be used, which reduces material and costs.

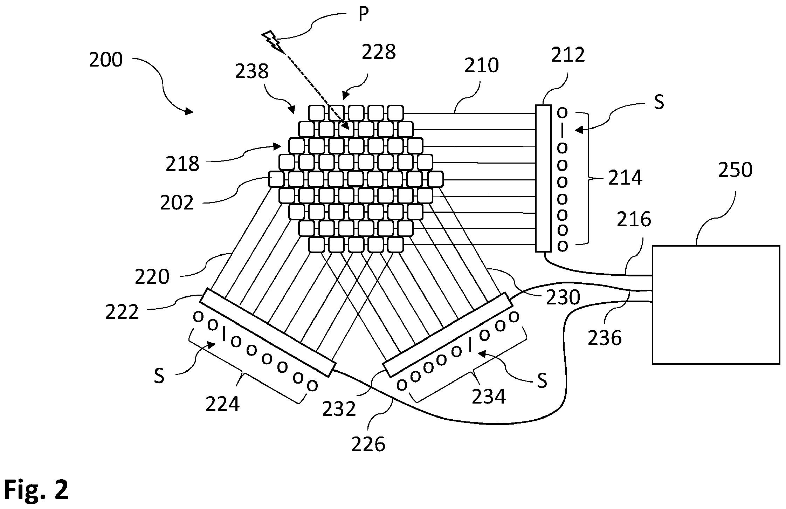

Fig. 2 schematically illustrates a detector array 200 according to a further preferred embodiment of the invention. Detector array 200 comprises, by means of example, 61 detector elements 202, arranged in hexagonal form with nine rows 218, nine first diagonal columns 228 (diagonal direction from top right to bottom left), and nine second diagonal columns 238 (diagonal direction from top left to bottom right); rows, first and second diagonal columns have an angle of approx. 60° with respect to each other. Rows and columns as such are different kinds of detector elements groups, i.e., there are three different kinds in this example. In total, there are 27 detector element groups, said nine rows, said nine first diagonal columns and said nine second diagonal columns. Each individual detector element is assigned to each of these three groups, i.e., each detector element is assigned to one row, to one first diagonal column and to one second diagonal column. For example, the detector element at the top left is assigned to the topmost row, to the leftmost first diagonal column, and to the middle (fifth) second diagonal column.

Further, the detector array 200 comprises 27 signal lines, in particular, nine signal lines 210 for the rows 218, nine signal lines 220 for the first diagonal columns 228, and nine signal lines 230 for the second diagonal columns 238. Said nine signal lines 210 form a signal line group 214 corresponding to the rows, said nine signal lines 220 form a signal line group 224 corresponding to the first diagonal columns, and said nine signal lines 230 form a signal line group 234 corresponding to the second diagonal columns. Each detector element 202 is assigned to and connected to three signal lines such that it is connected to one signal line 210 of the rows, to one signal line 220 of the first diagonal columns 228, and to one signal line 230 from the second diagonal columns 238.

Further, the detector array 200 comprises three readout taps, one readout tap 212 for the signal lines 210 for the rows, one readout tap 222 for the signal lines 220 for the first diagonal columns, and one readout tap 232 for the signal lines 230 for the second diagonal columns. All detector elements of a single row are connected in an OR-wiring, and all signal lines 210 of rows are also connected to the readout tap 212. Correspondingly, all detector elements of an individual diagonal column are connected in an OR-wiring, and all signal lines of one kind of diagonal columns are also connected to the readout tap 224 or 234. The readout taps 212, 224, 234 are connected, via further connection lines 216, 226, 236, to a circuit 250 that is configured to analyse and/or process signals present the signal lines.

In the following, the working principle of detector 200 will be described. The principle is similar to that of detector array 100 of Fig. 1, however, with tree signals created per photon instead of only two signals; only the relevant differences will, thus, be described in the following. By means of example, a single photon P is indicated, arriving at the detector element defined by the second row from the top, the third first diagonal column from the left, and the sixth second diagonal column from the left. This photon P creates a signal S simultaneously in each of the three signal lines connected to this specific detector element. These signals are indicated by a number "1" next to the readout taps 212, 222, 232 of the respective signal lines.

These three signals S created by the photon P can now be readout by the circuit 250, e.g., via readout taps 212, 222, 232. Irrespective of the specific readout mode, the information carried or provided by these three signals S allows determining the specific detector element at which the photon arrived and at which the signals were created. In this example, the detector element is the one at which the second row from the top, the third first diagonal column from the left and the sixth second diagonal column cross. Such determining or assigning can be performed by means of a look-up table or the like.

For example, these three signals S can be interpreted as a tuple (i,j,k) with i=2, j=3, and k=6, i.e., (2,3,6), where 1≤i,j,k≤9 and where i corresponds to the rows, j corresponds to the first diagonal columns, and k corresponds to the second diagonal columns. Such tuple (i,j,k) can be linked or assigned to corresponding positions of the detector elements within the entire detector array 200.

Compared to the detector array 100 of Fig. 1, detector array 200 has a lower ratio of detector elements versus signal lines. This allows better determination of the detector element at which the photon arrived, still having a low entire number of signal lines. In the embodiment of Fig. 1, a photon that does not create a signal in one of the two signal lines assigned to the detector element (e.g., due to any failure), will not allow determining the detector element. In the embodiment of Fig. 2, however, a photon that does not create a signal in one of the three signal lines assigned to the detector element (e.g., due to any failure), will still allow determining the detector element; there are still two signals present that allow unambiguous determination of the detector element In addition, using three signal lines per detector element allows unambiguous determination of the detector element for a higher number of situations of multiple photons arriving at the detector at the same time.

Note that other embodiments are possible in which, for example, only some of the detector elements are assigned to and connected to three signal lines, while the remaining detector elements are only assigned to and connected to two signal lines (for example, detector elements at the edge of the detector array).

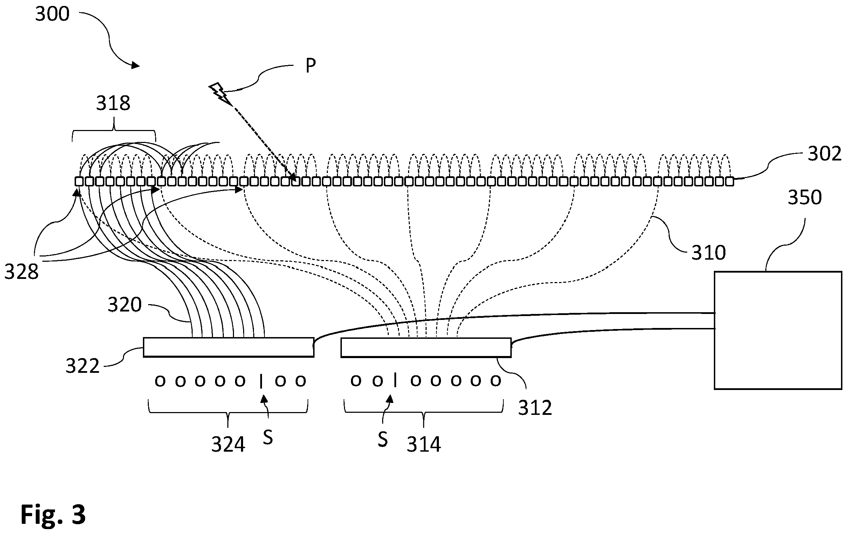

Fig. 3 schematically illustrates a detector array 300 according to a further preferred embodiment of the invention. Detector array 300 comprises, by means of example, 64 detector elements 302, arranged in a single row 118. This single row is divided into eight parts, each part comprising eight detector elements; one of these parts (at the left side) is labelled 318. These parts correspond to one kind of detector elements groups. Another kind of detector element group is a position or positional number of a detector element within such parts. For three of such parts, the first position within each part is labelled 328, for example. Following the tuple numbering introduced in Fig. 1, i corresponds to the part number and j corresponds to the positional number within a part, where 1≤i,j≤8.

In total, there are 16 detector element groups, said eight parts and said eight positional numbers. Each individual detector element is assigned to each of these two groups, i.e., each detector element is assigned to one part and to one positional. For example, the detector element at the left end is assigned to the leftmost part and to positional number one.

Further, the detector array 300 comprises 16 signal lines, in particular, eight signal lines 310 for the parts 318, and eight signal lines 320 for the positional numbers 328. Said eight signal lines 310 form a signal line group 314 corresponding to the parts, and said eight signal lines 320 form a signal line group 324 corresponding to the positional numbers. Each detector element 302 is assigned to and connected to two signal lines such that it is connected to one signal line 310 of the parts and to one signal line 320 of the positional numbers 328. Note that in Fig. 3, all of said signal lines 310 are shown by dashed lines; however, only some of said signal lines 320 (from the readout tap 324 to each of the first eight detector elements, and some further ones) are shown by solid lines.

Further, the detector array 300 comprises two readout taps, one readout tap 312 for the signal lines 310 for the parts, and one readout tap 322 for the signal lines 320 for the positional numbers. All detector elements of a single part are connected in an OR-wiring, and all signal lines 310 of parts are also connected to the readout tap 312. Correspondingly, all detector elements of a single group of positional numbers are connected in an OR-wiring, and all signal lines 320 of groups of positional numbers are also connected to the readout tap 322. Note that in Fig. 3, all of said signal lines 310 are shown by dashed lines; however, only some of said signal lines 320 (from the readout tap 324 to each of the first eight detector elements, and some further ones) are shown by solid lines. The readout taps 312, 324 are connected, via further connection lines 316, 326, to a circuit 350 that is configured to analyse and/or process signals present the signal lines.

By comparing the detector array 300 of Fig. 3 with detector array 100 of Fig. 1, it can be seen that the detector array 100 can be transformed into detector array 300 by taking the individual rows and putting them next to each other to form a single long row. The wiring of the detector elements and the signal lines, however, is not changed. In this way, the rows of detector array 100 become the parts of detector array 300, and the columns of detector array 100 become the positional numbers of detector array 300.

In the following, the working principle of detector 300 will be described. The principle is similar to that of detector array 100 of Fig. 1, however, with a different relation between signals and positions of detector elements; only the relevant differences will, thus, be described in the following. By means of example, a single photon P is indicated, arriving at the detector element defined by the third part from the left, and positional number six. This detector element corresponds to number 22 from the left, related to the entire long row. This photon P creates a signal S simultaneously in each of the two signal lines connected to this specific detector element. These signals are indicated by a number "1" next to the readout taps 314, 324 of the respective signal lines.

These two signals S created by the photon P can now be readout by the circuit 350, e.g., via readout taps 312, 322. Irrespective of the specific readout mode, the information carried or provided by these two signals S allows determining the specific detector element at which the photon arrived and at which the signals were created. In this example, the detector element is the one at positional number six from the left within the third part from the left. Such determining or assigning can be performed by means of a look-up table or the like.

For example, these two signals S can be interpreted as a tuple (i,j) with i= and j=6, i.e., (3,6). Such tuple (i,j) can be linked or assigned to corresponding positions of the detector elements within the entire detector array 300 as mentioned before.

Compared to the detector array 100 of Fig. 1, detector array 300 has the same ratio of detector elements versus signal lines but a different form, i.e., a row or line detector instead of a matrix form. While the readout, basically, is the same as for detector array 100, detector array 300 can be used, for example, spectrally resolved imaging, wherein the photon (or light) is directed to the detector array by means of a diffraction grating or prism.

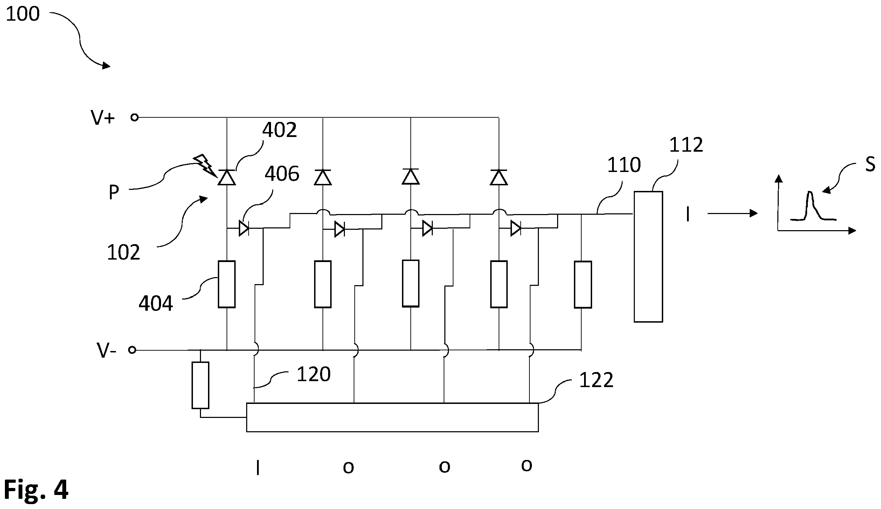

Fig. 4 schematically illustrates the detector array 100 of Fig. 1 with other details than shown in Fig. 1. In particular, some (four) of the detector elements 102 are shown with specific electronic components. In this example, each detector element 102 comprises a diode 402, e.g., a single photon avalanche diode. In addition, an electric resistance 404 (so-called quenching resistance) is provided. Instead of quenching resistance 404, activing quenching might be used. All detector elements 102 (diode 402 and resistance 404 in series) are connected in parallel between a positive (supply) voltage V+ (avalanche voltage, e.g., 50V) and a negative voltage V- (might be ground or 0V). The positive voltage V+ can be individually set, for example.

Further, a diode 406 is provided for each detector element 102, which is used to connect all detector elements 102 of a row (in the example shown, all detector elements are assigned to the same row; only one row is shown) in an Or-wiring to form a signal line 110 for a row, which is connected to readouttap 112. In addition, the diode 406 is used to connect detector elements 102 of a column (four columns, but only one detector element per column is shown) in an Or-wiring to form a signal line 120 for a row, which is connected to readout tap 112. Instead of diodes 406, a semiconductor switch like a transistor or MOSFET and, in addition, a diode, might be used; also, a logic OR-wiring (or OR-linkage might be used.

Note that there would be further rows with detector elements; while corresponding signal lines of rows would also be connected to readout tap 112, one detector element per further row would be connected to a corresponding signal line 120 for a column. An OR-wiring as shown for the row would be used.

Without any photon arriving at one of the detector elements 102 or its diode 402, a certain voltage level is present at the end of signal line 110 (and at the readout tap 112) and at the end of signal line 120 (at the readout tap 122). Depending on the setting of the individual components and the positive voltage, such voltage level at the end of the signal lines can be, for example, 0V.

If a photon P arrives at one of the detector elements 102 or its diode 402 (as indicated for the leftmost detector element), the diode 402 will, for a short time, have a lower electrical resistance than without a photon. This results - in the case shown - in that the voltage level present at the end of single line 110 will change (e.g., rise), which is or can be interpreted as the signal S in the corresponding row. In addition, this results in that the voltage level present at the end of the leftmost signal line 120 will change, which is or can be interpreted as the signal S in the corresponding (leftmost) column.

If a photon would arrive at another detector element or its diode, e.g., the second one from the left, the respective diode will, for a short time, have a lower electrical resistance than without a photon. This results in that the voltage level present at the end of signal line 110 will change (e.g., rise), which is or can be interpreted as the signal S in the corresponding row. Note that in signal line 110 for the row, the signal S will be created irrespective of at which detector element of the row the photon arrives; this is due to the OR-wiring. Contrary to the situation with the photon arriving at the leftmost detector element, the voltage level present at the end of the second signal line 120 from the left would change, which would then be interpreted as the signal S in the corresponding (second) column.

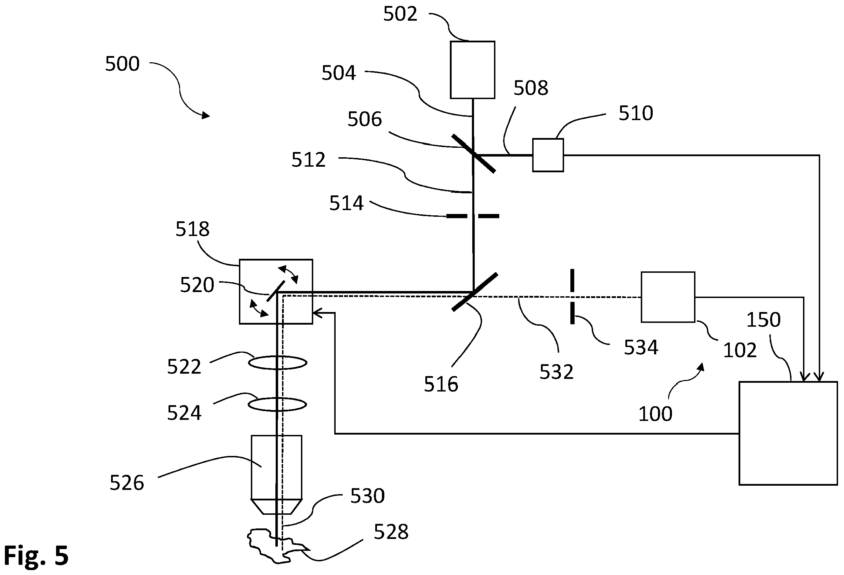

Fig. 5 schematically illustrates an imaging system 500 according to a further preferred embodiment of the invention. Imaging system 500 is, by means of example, a microscope comprising the detector array 100 of Fig. 1; only the detector elements 102 and the circuit 150 of the detector array 100 are shown in Fig. 5; for further details refer to Fig. 1 and the corresponding description. Note that also any other detector array described herein can be used within microscope or imaging system 500.

Microscope 500 further comprises illumination optics 502 (including a light source, e.g., a laser) for generating an illumination beam 504. By means of an optional beam splitter 506, a part 508 of illumination beam might be directed to a further detector 510, which might be used to determine the illumination spectrum used or a timing reference to determine the arrival time with respect to the laser pulse . Another part 512 of the illumination beam is directed, via an illumination aperture 514 (pinhole), to a further beam splitter 516. A part of the illumination beam is directed to scanning unit 518, which comprises one or more scanning mirrors 520 (e.g., one scanning mirror for x and one for y direction; also, one or two additional scanning mirrors might be provided for compensating artefacts or distortions). The scanning mirrors 520 direct the illumination beam, in a scanning manner, via imaging optics 522, 524 (e.g., lenses) to objective lens 526 in order to illuminate a sample 528.

From the sample 528, detection light 530 (for example fluorescence light, generated in the sample by the illumination beam)is guided via objective lens 526, imaging optics 524, 522, scanning unit 518 (and its scanning mirrors 520) to beam splitter 516. At least a part 532 of the detection light passes beam splitter 516 and is directed, via imaging aperture 534 (pinhole), onto the detector array 100 or its individual detector elements 102, respectively. Depending on the specific application, detector array 100 might comprise a spectrometer (or diffraction grating).

The photons of the detection light 532 arriving at the detector elements 102 can then be acquired and analyzed as described above with respect to Figs. 1 to 4. As mentioned, such detector array allows high spatial and high temporal resolution in imaging the sample.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100, 200: detector array
- 102,202: detector elements
- 110, 210: signal lines for rows
- 112, 212: readout taps for rows
- 114, 214: signal line groups, rows
- 116, 216: connection lines
- 118,218: rows
- 120, 220, 230: signal lines for columns
- 122, 222, 232: readout taps for columns
- 124, 224, 234: signal line groups, columns
- 126, 226, 236: connection lines
- 128, 228, 238: columns
- 150, 250: circuit

- 300: detector array
- 302: detector elements
- 310: signal lines for parts of a row
- 312: readout taps for parts of a row
- 314: signal line groups, parts of a row
- 316: connection line
- 318: parts of a row
- 320: signal lines for positional numbers
- 322: readout taps for positional numbers
- 324: signal line groups, positional numbers
- 326: connection line
- 328: positional numbers
- 350: circuit

- 402: single photon avalanche diode
- 404: quenching resistance
- 406: diode
- 500: imaging system, microscope
- 502: illumination optics
- 504, 508, 512: illumination beam
- 506,516: beam splitter
- 510: detector
- 514: illumination aperture
- 518: scanning unit
- 520: scanning mirror
- 522,524: imaging optics
- 526: objective lens
- 528: sample
- 530, 532: detection light
- 534: imaging aperture

- P: photons
- S: signals
- V+, V-: supply voltage

## Claims

1. A detector array (100, 200, 300) comprising multiple detector elements (102, 202, 302) and multiple signal lines (110, 120, 210, 220, 230, 310, 320),
wherein each of the multiple detector elements (102, 202, 302) is connected to at least two of the multiple signal lines (110, 120, 210, 220, 230, 310, 320),
wherein each of the multiple signal lines (110, 120, 210, 220, 230, 310, 320) is connected to at least two of the multiple detector elements (102, 202, 302), and
wherein each of the multiple detector elements (102, 202, 302) is configured to create a signal (S) simultaneously in each of the connected signal lines (110, 120).

2. The detector array (100, 200, 300) of claim 1, wherein all detector elements (102, 202, 302) connected to the same signal line (110, 120, 210, 220, 230, 310, 320) are connected in an OR-wiring.

3. The detector array (100, 200, 300) of claim 1 or 2, comprising multiple signal line groups (114, 124, 214, 224, 234, 314, 324) of signal lines, wherein each of the multiple signal lines (110, 120, 210, 220, 230, 310, 320) is assigned to a single one of the multiple signal line groups (114, 124), and wherein each of the multiple detector elements (102, 202, 302) is connected to one signal line (110, 120, 210, 220, 230, 310, 320) of each of at least two of the multiple signal line groups (114, 124, 214, 224, 234, 314, 324, 210, 220, 230, 310, 320).

4. The detector array (100, 200, 300) of claim 3, further comprising a readout tap (112, 122, 212, 222, 232, 312, 322) for each of the multiple signal line groups (114, 124, 214, 224, 234, 314, 324) wherein each readout tap is configured to provide information about all signals present at the assigned signal lines.

5. The detector array (100, 200, 300) of claim 3 or 4, comprising multiple different kinds of detector element groups (118, 128, 218, 228, 238, 318, 328) with at least two detector element groups per kind,
wherein each of the multiple detector elements (102, 202, 302) is assigned to at least two of the multiple kinds of detector element groups,
wherein at least two of the multiple detector elements (102, 202, 302) are assigned to each detector element group,
wherein, for each detector element group, all detector elements assigned to the same detector element group are connected to the same signal line (110, 120, 210, 220, 230, 310, 320) from one (114, 124, 214, 225, 234, 314, 324) of the multiple signal line groups,
wherein each kind of detector element groups is assigned to a different one of the multiple signal line groups.

6. The detector array (100, 200) of claim 5, wherein the multiple detector elements (102, 202) are arranged in rows (118) and columns (128), preferably according to a matrix, wherein rows and columns correspond to different kinds of detector element groups.

7. The detector array (300) of claim 5, wherein the multiple detector elements are arranged in a single row, wherein the row comprises at least two parts (318), wherein such part of a row corresponds to a kind of detector element groups, and wherein a positional number (328) of a detector element within each part (318) corresponds to another kind of detector element groups.

8. The detector array (200) of any one of claims 5 to 7, comprising at least three signal line groups (214, 224, 234) of signal lines.

9. The detector array (200) of claim 8, wherein the multiple detector elements (202) are arranged in rows (218) and diagonal columns (228, 238), wherein rows and two different diagonal directions of columns correspond to different kinds of detector element groups.

10. The detector array (100, 200, 300) of any one of the preceding claims, wherein a number of the multiple detector elements (102, 202, 302) is greater than a number of the multiple signal lines (110, 120, 210, 220, 230, 310, 320).

11. The detector array (100, 200, 300) of any one of the preceding claims, wherein each of the multiple detector elements (102, 202, 302) comprises a photo diode (402, preferably a single photon avalanche diode, and wherein creating the signal (S) comprises changing a voltage level applied to the respective signal line (110, 120, 210, 220, 230, 310, 320).

12. The detector array (100, 200, 300) of any one of the preceding claims, further comprising a circuit (150, 250, 350) connected, directly or indirectly, to each one of the multiple signal lines (110, 120, 210, 220, 230, 310, 320), wherein the circuit (150, 250, 350) is configured to determine, upon receiving at least one signal (S) from each of at least two of the multiple signal lines (110, 120, 210, 220, 230, 310, 320), one or more out of the multiple detector elements corresponding to the signals (S).

13. The detector array (100, 200, 300) of claim 12, wherein the circuit (150, 250, 350) is configured to determine whether the received signals are unambiguously assignable to one or more out of the multiple detector elements (102, 202, 302), and
if so, to determine the one or more out of the multiple detector elements (102, 202, 302), and

14. The detector array (100, 200, 300) of claim 13, wherein, the circuit (150, 250, 350) is configured to, if the received signals are not unambiguously assignable to one or more out of the multiple detector elements (102, 202, 302), at least one of:
- determine a minimum number of detector elements, which potentially could have created the signals;
- determine all detector elements, which potentially could have created the signals; and
- not determine any detector element.

15. The detector array (100, 200, 300) of claim 13 or 14, wherein the circuit (150, 250, 350) is configured to determine the positions of the one or more out of the multiple detector elements (102, 202, 302) within the detector array (100, 200, 300) as points of incidence of photons (P).

16. The detector array (100, 200, 300) of any one of claims 13 to 15, wherein the circuit (150, 250, 350) is configured to determine arrival times of photons (P) at the one or more out of the multiple detector elements (102, 202, 302).

17. The detector array (100, 200, 300) of claim 16, wherein the circuit (150, 250, 350) is configured to consider signal transit times of the received signals when determining said arrival times of photons (P) at the one or more out of the multiple detector elements (102, 202, 302).

18. An imaging system (500), preferably a microscope, configured to image a sample (528), comprising the detector array (100) of any one of the preceding claims.

19. The imaging system (500) of claim 18, configured to image said sample (528) in at least one of: a scanning manner, by simultaneously illuminating several foci, a spectrally resolved manner, and a time resolved manner,
wherein, for spectrally resolved manner, the imaging system is further configured to direct light from the sample to the detector array such that light of different wavelengths is directed to different detector elements.

20. A method to image a sample (528) by means of the imaging system (500) of claim 18 or 19.
